# EUROPEAN PATENT SPECIFICATION

(11) **EP 2 101 137 B1**
(45) Date of publication and mention of the grant of the patent: **15.08.2012**
(21) Application number: 09151099.0
(22) Date of filing: 22.01.2009
(51) Int. Cl.: F28F 27/00, F24F 12/00, F28D 19/04

(54) **A rotary heat exchanger**
Drehwärmetauscher
Échangeur thermique rotatif

(30) Priority: 14.03.2008 DK 200800397
(43) Date of publication of application: 16.09.2009
(73) Proprietor: VKR Holding A/S, 2970 Hørsholm (DK)
(72) Inventor: Nielsen, Finn, 5550 Langeskov (DK)
(74) Representative: Trier, Mikkel Roed

(56) References cited:
- WO-A-2008/058211
- GB-A- 2 116 305
- JP-A- 9 229 577
- US-B1- 7 104 082

## Description

The present invention relates in a first aspect to a rotary heat exchanger according to the introductory part of claim 1.

In rotary heat exchangers heat is exchanged from a polluted fluid duct to a clean fluid duct by means of a typically disc-shaped rotor, cf. International Patent Class No. F28D19/04. Channel walls manufactured from a material with a high thermal capacity define transverse channels of the rotor of relatively small diameter. During operation the rotor rotates and polluted fluid flows through the rotor channels in the polluted fluid duct, heat energy being transferred from the fluid to the channel walls. When a rotor channel has rotated about half a turn with the rotor, the channel enters the clean fluid duct, transferring its accumulated heat energy to the clean fluid now flowing through the channel. This provides for a very efficient heat exchange compared to other heat exchanging systems.

One drawback of rotary heat exchangers is that when the rotor channels rotate from the polluted zone into the clean zone, a small amount of polluted fluid remains in each channel, this amount of polluted fluid being mixed into the clean fluid. In many applications of rotary heat exchangers, such as ventilation of domestic buildings or office buidlings, this leak provides amounts of polluted fluid sufficiently large to contaminate the clean fluid.

It has been attempted to solve this problem by means of providing a flow path between the clean fluid and polluted fluid ducts through a number of the rotor channels, cf. for example JP 9229577 A. Hereby, clean fluid blows out or purges the rotor channels into the polluted fluid duct before the channels rotate to enter the clean fluid duct. A prerequisite for this solution is that the pressure is always suitably greater at the clean side than on the polluted side.

The inventor of the present invention has discovered that this method of cleaning the rotor channels is not sufficient for rotary heat exchangers installed to ventilate a domestic building or an office building. In such buildings it is typically unacceptable that any amount of odour from pollutants enter into clean air to be blown into the building. Typically, one single ventilation system is installed in one block of flats or apartments or an office building, one central ventilation duct providing clean air to all apartments or offices. If polluted air ventilated from one apartment or office are mixed with the clean air, all apartments or offices in the building will be ventilated with this contaminated polluted clean air. Strong odours such as cooking odours, tobacco smoke or bio effluents will contaminate the clean air, even if provided in very small amounts.

With the above-explained solution in domestic and office buildings it can not be sufficiently ensured that fluid does not enter into the clean fluid duct from the polluted fluid duct, making it necessary to use other, less energy efficient heat exchanging devices.

WO 2008 058211 A2 discloses a ventilation system forming a prior right with respect to the present invention within the meaning of Art. 54(3) EPC. This document fails to disclose that the pressure difference between the clean fluid chamber and the polluted fluid chamber is continuously measured and that control means are arranged to continuously control a pressure loss device on the basis of said pressure difference.

On this background it is the object of the first aspect of the present invention to improve a rotary heat exchanger of the above-mentioned type such that it may be used in domestic and office buildings with a smaller risk of contaminating inlet air.

To meet this object the rotary heat exchanger according to the first aspect of the present invention is characterized by further comprising the features according to the characterizing part of claim 1.

The inventor of the present invention has discovered that the described leaking problems of the above-described solution are due to dynamically changing pressure differences between the chambers within the rotary heat exchanger. These changes may be due to dirt particles stuck in the rotor channels, temperature variations of the inlet and outlet air etc.

With the rotary heat exchanger according to the first aspect of the present invention it is possible to continuously control the relevant pressure differences between the respective chambers of the heat exchanger to ensure that no polluted fluid is mixed with clean inlet fluid.

In a preferred embodiment of the first aspect of the invention said flow path connects said upstream clean fluid chamber and said upstream polluted fluid chamber. This provision of the flow path has proven to be an optimum solution regarding construction and control of the heat exchanger as well as cleaning the rotor channels.

In another embodiment said control means is arranged to continuously control that substantially all polluted fluid and substantially no clean fluid of said channels of said flow path is continuously blown out or purged. This provides for optimally clean air combined with efficient operation conditions relating to fan energy consumption.

In another embodiment said measuring means is arranged to measure a pressure difference between pressures in each of said four chambers in relation to a common reference pressure. This provides for a number of possibilities relating to installation and control of the device and ensures an optimum operation; for example the flow paths of clean fluid and polluted fluid, respectively, may be reversed. In a further development of this embodiment said control means are arranged to record, and preferably activate an alert, when a pressure difference between said polluted fluid chambers or between said clean fluid chambers goes above a threshold value. This may, e.g. remotely, provide an indication to an operator that rotor channels need cleaning or de-icing.

In another embodiment said channels extend substantially parallel to a rotation axis of said rotor, a part of said separating wall being displaced in a direction perpendicular to said separating wall such as to provide said flow path.

In another embodiment said measuring means and said control means are in the form of electronic devices.

In another embodiment said pressure loss device is provided in the form of an electric motor driven fluid damper, preferably positioned in a duct portion provided outside said chambers, more preferably positioned outside said upstream polluted fluid chamber.

In a second aspect the present invention provides a method for ventilation of a building according to claim 9.

The second aspect of the invention provides advantages similar to those described above in relation to the first aspect of the invention.

In a preferred embodiment of the second aspect of the present invention said method is carried out by means of a rotary heat exchanger according to one of the above embodiments of the first aspect of the invention.

In another embodiment said method is provided for ventilation of a domestic or an office building.

The invention will be explained in detail in the following by means of examples of embodiments with reference to the schematic drawing, in which
Fig. 1 is a side view of an embodiment of the rotary heat exchanger according to the first aspect of the present invention mounted in a first position,
Fig. 2 is a side view taken perpendicularly to the view of Fig. 1 showing a detail of the heat exchanger of Fig. 1,
Fig. 3 is flow diagram of an embodiment of the second aspect of the present invention, and
Fig. 4 is a side view of the rotary heat exchanger of Fig. 1 mounted in an alternative position.

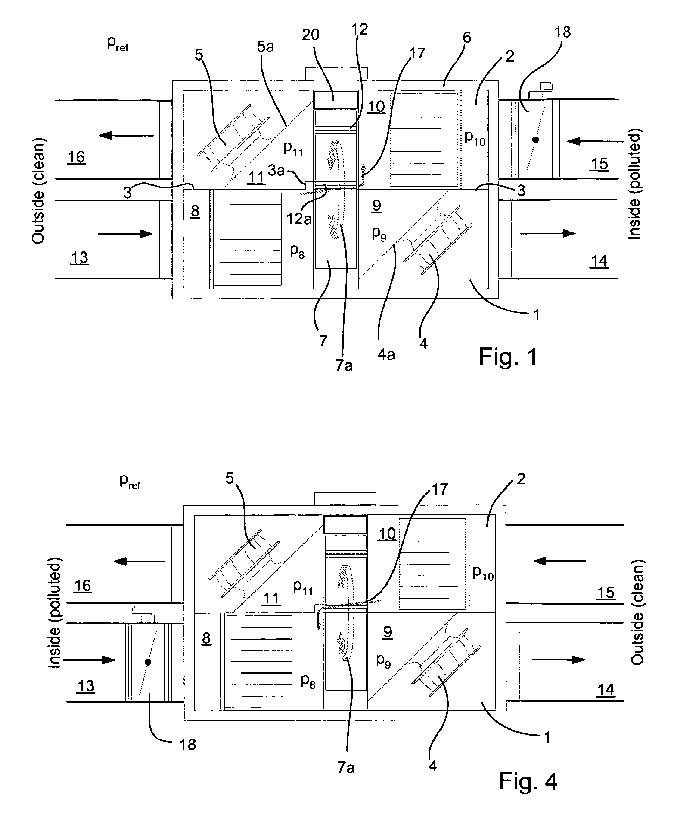

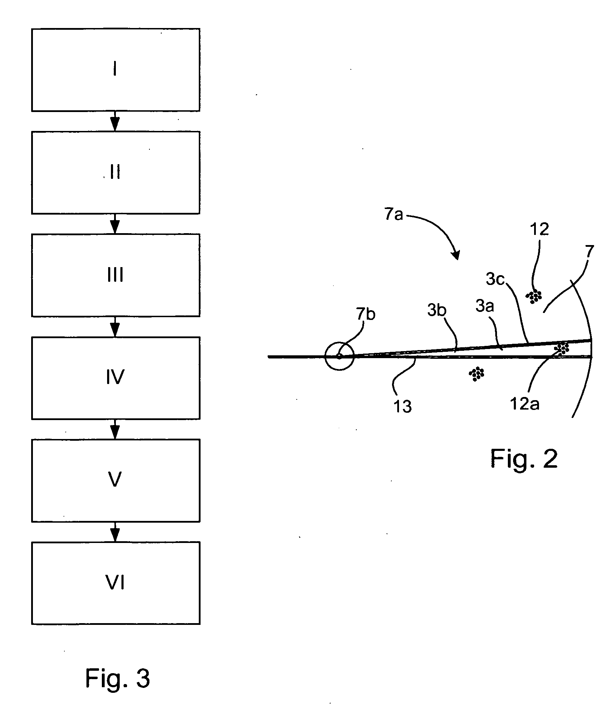

   Figs 1 and 2 show an embodiment of a rotary heat exchanger according to the first aspect of the invention and installed in a domestic building or an office building (not shown). In Fig. 1 the rotary heat exchanger is shown from the side with a side wall of a metal casing 6 having been removed. The rotary heat exchanger comprises a clean fluid duct in the form of air duct 1 and a polluted fluid duct in the form of air duct 2 separated by a metallic separating wall 3. Suction means in the form of a fan 4 mounted on an inclined plate 4a in the duct 1 and a fan 5 mounted on an inclined plate 5a in the duct 2 are arranged to draw air through the ducts 4, 5. The diagonally positioned, inclined plates 4a, 5a separate respective low-pressure sides of the fans 4, 5 from respective high-pressure sides. The ducts 1, 2 are encased in the metal casing 6.
   A disc-shaped, circular-cylindrical rotor 7 separates the duct 1 into an upstream and a downstream clean fluid chamber in the form of air chambers 8, 9, respectively. The rotor 7 also separates the duct 2 into an upstream and a downstream polluted fluid chamber in the form of air chambers 10, 11, respectively. The rotor 7 comprises a thin circumferential layer of metal enclosing layers of corrugated or wave-shaped metal forming transverse channels 12 of which only a few are shown in Figs 1 and 2. Walls of the channels 12 are of relatively small diameter and are manufactured from a metal with a high thermal capacity. The channels extend in parallel to a vertical rotational axis (7b, cf. Fig. 2) of the rotor 7.
   The chambers 8 to 11 extend into respective air ducts 13 to 16, which connect one or more rooms or offices (not shown) of the building with the outside in order to ventilate the building.
   In operation the fan 4 draws clean, cold air from outside through the duct 13 into the chamber 8, through a number of the channels 12 into the chamber 9 and finally through the duct 14 to a room or an office of the building. Correspondingly, the fan 5 draws polluted, warm air from the office or room through the duct 15 into the chamber 10, through a number of the channels 12 into the chamber 11 and finally through the duct 16 to the outside. The chambers 9, 11 are defined by the separating wall 3, side walls of the casing 6, rotor 7 and fans 4, 5, the fans 4, 5 and fixtures 4a, 5a thus separating the chambers 9, 11 and ducts 14, 16, respectively, from each other. The chambers 8, 10 are defined by the separating wall 3, side walls and a bottom of the casing 6, rotor 7 and extend directly into the ducts 13, 15.
   Meanwhile, heat is exchanged from the polluted air duct 2 to the clean air duct 1 by means of rotation of the rotor 7 in the direction of the arrows 7a, which is achieved by means of a not shown electric motor. The polluted air flows through the rotor channels 12 in the air duct 2, heat energy being transferred from the warm air to the channel walls. When a rotor channel has rotated about 180° with the rotor 7, the channel enters the air duct 1, transferring its accumulated heat energy to the clean air now flowing the opposite way through the channel.
   Fig. 2 shows a detail of the rotary heat exchanger seen from the left side in Fig. 1, showing a right part of the rotor 7. As is visible in both Figs 1 and 2 a small part of the separating wall 3 between the chambers 8 and 11 and adjacent the rotor 7 is displaced in a direction perpendicular to the remaining parts of the separating wall 3. More specifically, a narrow, longitudinal section of the separating wall 3 adjacent the rotor 7 has been replaced by a metallic angled wall section 3a with a vertical section 3b extending from the separating wall 3 into a horizontal section 3c, which extends to a side face of the rotor 7. The horizontal section 3c of the wall section 3a descends slightly to reach the general level of the separating wall 3 in the rotational axis of the rotor 7, i.e. the wall section 3a extends about half-way in a transverse direction of the rotary heat exchanger. Hereby, a narrow flow path illustrated by means of arrow 17 is provided, which at any given rotary position of the rotor 7 extends from the chamber 8 to the chamber 10 through channels 12a (of which only a few are shown in Fig. 2) of the channels 12.
   In operation a blowing out or purging of the channels 12 (i.e. channels 12a) through the flow path 17 is thus continuously carried out before the channels 12 rotate from the air duct 2 to enter the air duct 1. A prerequisite for this is that an air pressure p₈ in the chamber 8 is always greater than the air pressure p₁₀ in the chamber 10.
   An electronic pressure measuring means is provided in a control unit 20 positioned above the rotor 7 and arranged to continuously measure air pressures p₈ to p₁₁ in the respective chambers 8 to 11. In this application, relating to control and measurements the expression "continuously" is to be interpreted as comprising "intermittently" or "step-wise". The measurement may be carried out in any way known to the skilled person, e.g. by means of a manometer. In practice the measuring means is arranged to measure pressure differences Δp₈ to Δp₁₁ between the pressures p₈ to p₁₁ and a common reference pressure p_{ref}, the latter being measured outside the rotary heat exchanger. Algebraically expressed, Δ*pₓ* = *p_{ref}* - *pₓ*, x expressing one of the chambers 8 to 11. Note that p₉ and p₁₁ denote the air pressures on the side of the respective fans 5, 4, respectively, adjacent the rotor 7.
   Further, an electronic control means is arranged in the control unit 20 to continuously control a pressure loss device in the form of an electric motor driven air damper 18 positioned in the duct 15. In the embodiment shown the air damper 18 comprises a number of electrically driven metal plates, which are rotatable about horizontal axes in order to provide a pressure drop in the chamber 10. In other embodiments the pressure loss device may be provided in the form of any other suitable unit, which can be electronically controlled to continuously provide varying pressure losses.
   The control means calculates a suitable pressure drop to be provided by the air damper 18 on the basis of a difference between pressure differences Δp₈ and Δp₁₀ compared to a target difference Δp_{target}. Δp_{target} is continuously calculated such that substantially all polluted air and substantially no clean air of the channels 12a of the flow path 17 is continuously blown out from the chamber 8 into the chamber 10 before the channels 12a rotate into the clean air duct 1. The target difference Δp_{target} depends of course on the rotational speed of the rotor 7, which value is taken into account in the calculations carried out by the electronics of the control means. Taking into consideration the time constant of the automatic control system, in practice Δp_{target} is set somewhat higher than the optimum value to ensure that no polluted air enters the clean air duct 1 during pressure variations.
   The electronic control means provided in the control unit 20 is arranged to record when the pressure drop over the rotor 7 in one of the ducts 1 or 2 has grown to be to large (i.e. when p₉ - p₈ or p₁₀ - p₁₁ exceeds a certain predefined threshold value). This provides an indication that the rotor channels 12 may need cleaning or de-icing, a corresponding message being sent remotely to an operator.
   Furthermore, the electronic control means is arranged to ensure that the pressure differences between pressures p₈ and p₁₁ and p₉ and p₁₀, respectively, do not grow to be too large as this might unintentionally draw air through sealings between the clean air duct 1 and the polluted air duct 2.
   All in all, the relevant pressure differences between the respective chambers 8 to 11 of the heat exchanger are continuously controlled to ensure that no polluted air is mixed with clean inlet air and to ensure an optimum operation of the heat exchanger.
   Fig 3 shows a flow diagram with steps I to VI of a method for ventilation of a building according to an embodiment of the second aspect of the present invention. The method is carried out on the rotary heat exchanger shown in Figs 1 and 2 and comprises the steps of
   I. providing the rotary heat exchanger of Figs 1 and 2 having ducts 1 and 2 for ventilation of a domestic building,
   II. drawing air through the ducts 1 and 2,
   III. heat exchanging of air between the ducts 1 and 2 by means of rotor 7 with transverse channels 12,
   IV. purging or blowing out the channels 12 before rotating to enter the duct 1 by means of flow path 17 connecting chamber 8 and chamber 10,
   V. continuously measuring a pressure difference between the chamber 8 and the chamber 10 as well as between the chamber 9 and the chamber 10, and
   VI. continuously controlling air damper 18 on the basis of said pressure difference such as to ensure that air pressure p₈ in chamber 8 is continuously greater with the necessary amount than air pressure p₁₀ in chamber 10, and that air pressure p₉ in chamber 9 is continuously greater than air pressure p₁₀ in chamber 10.
   The measurements of the pressure differences Δp₈ - Δp₁₁ of the four air chambers 8 to 11 of the embodiment of a rotary heat exchanger according to the first aspect of the invention shown in Fig. 1 provides the possibility of mounting the heat exchanger in various different positions. This has the advantage that an installer may install the heat exchanger in any of the possible installation positions, only having to program the control unit correspondingly.
   Fig. 4 shows a side view similar to that of Fig. 1 of the rotary heat exchanger of Fig. 1 mounted in an alternative position. In the following only differences from the position of the rotary heat exchanger of Fig. 1 are described.
   In Fig. 4 the flow paths of air ducts 1 and 2 have been reversed such that duct 1 now carries clean air and duct 2 carries polluted air. This means that the rotor spins the opposite way, cf. arrow 7a, and the air damper 18 is positioned in duct 13 Furthermore, the clean air flows the opposite way through the flow path as shown by the reversed arrow 17.
   In any of the mounted positions shown in Figs 1 and 4, the rotary heat exchanger may, as further alternatives, be mounted upside down. Reversing the heat exchanger in any of the described ways would not impart any substantial differences to the function or efficiency of the rotary heat exchanger of Fig. 1. It may, however, be necessary to change structural details such as positions of fittings and the like.
   The rotary heat exchanger according to the first aspect of the invention may be designed in other ways than the above-described ones, including
   - providing the flow path by means of inclining the rotor channels in an amount sufficient such as to extend from the clean zone to the polluted zone at the transition of the rotor channels from the clean zone to the polluted zone (dispensing with wall section 3a),
   - pressure differences are measured by measuring pressures in two chambers and subtracting one from the other (instead of using a reference measurement),
   - the flow path extends between downstream fluid chambers or between and upstream and downstream fluid chambers (instead of between upstream fluid chambers),
   - rotor speeds are varied to control pressure differences, and
   - temperatures are measured in one or more of the chambers to better control operation of the rotary heat exchanger.

## Claims

1. A rotary heat exchanger comprising
a clean fluid duct (1) and a polluted fluid duct (2) separated by a separating wall (3), suction means (4) being arranged to draw fluid through said ducts (2, 3),
a rotor (7) separating each said ducts (2, 3) into an upstream and a downstream clean fluid chamber (8; 9) and a downstream and an upstream polluted fluid chamber (10; 11), respectively, said rotor (7) having transverse channels (12) connecting said upstream and downstream clean fluid chambers (8, 9) and said upstream and downstream polluted fluid chambers (10, 11), respectively,
a flow path (17) at any given rotary position of said rotor (7) connecting one clean fluid chamber (8) and one polluted fluid chamber (10) through a number of said channels (12a) such as to blow out or purge said channels (12a) before rotating to enter said clean fluid duct (1),
measuring means arranged to continuously measure a pressure difference between said one clean fluid chamber (8) and said one polluted fluid chamber (10), and
control means arranged to continuously control a pressure loss device (18) on the basis of said pressure difference such as to ensure that a fluid pressure in said one clean fluid chamber (8) is greater than a fluid pressure in said one polluted fluid chamber (10).

2. A rotary heat exchanger according to claim 1, wherein said flow path (17) connects said upstream clean fluid chamber (8) and said upstream polluted fluid chamber (11).

3. A rotary heat exchanger according to claim 1 or 2, wherein said control means is arranged to continuously control that substantially all polluted fluid and substantially no clean fluid of said channels (12a) of said flow path (17) is continuously blown out.

4. A rotary heat exchanger according to any one of the previous claims, wherein said measuring means is arranged to measure a pressure difference between pressures in each of said four chambers (8 - 11) in relation to a common reference pressure.

5. A rotary heat exchanger according to claim 4, wherein said control means is arranged to record, and preferably activate an alert, when a pressure difference between said polluted fluid chambers (10, 11) or between said clean fluid chambers (8, 9) goes above a threshold value.

6. A rotary heat exchanger according to any one of the previous claims, wherein said channels (12, 12a) extend substantially parallel to a rotation axis of said rotor (7), a part (3a) of said separating wall (3) being displaced in a direction perpendicular to said separating wall (3) such as to provide said flow path (17).

7. A rotary heat exchanger according to any one of the previous claims, wherein said measuring means and said control means are in the form of electronic devices.

8. A rotary heat exchanger according to any one of the previous claims, wherein said pressure loss device (18) is provided in the form of an electric motor driven fluid damper, preferably positioned in a duct portion (15) provided outside said chambers (8-11), more preferably positioned outside said upstream polluted fluid chamber (11).

9. A method for ventilation of a building, comprising the steps of
providing a rotary heat exchanger having a clean fluid duct (1) and a polluted fluid duct (2) separated by a separating wall (3),
drawing fluid through said ducts (1, 2),
heat exchanging of fluid between said two fluid ducts (1, 2) by means of a rotor (7) with transverse channels (12),
purging or blowing out said channels (12) before rotating to enter said clean fluid duct (1) by means of a flow path (17) connecting one clean fluid chamber (8) and one polluted fluid chamber (10),
continuously measuring a pressure difference between said one clean fluid chamber (8) and said one polluted fluid chamber (10), and
continuously controlling a pressure loss device (18) on the basis of said pressure difference such as to ensure that a fluid pressure in said one clean fluid chamber (8) is greater than a fluid pressure in said one polluted fluid chamber (10).

10. A method according to claim 9, wherein said method is carried out by means of a rotary heat exchanger according to any one of claims 1 to 8.

## Patentansprüche

1. Drehwärmetauscher mit
einer Reinfluidleitung (1) und einer Schmutzfluidleitung (2), die durch eine Trennwand (3) getrennt sind, wobei Saugmittel (4) angeordnet sind, um Fluid durch die Leitungen (2, 3) zu ziehen,
einem Rotor (7), der jede der Leitungen (2, 3) in eine stromaufwärts und eine stromabwärts angeordnete Reinfluidkammer (8, 9) bzw. eine stromabwärts und eine stromaufwärts angeordnete Schmutzfluidkammer (10, 11) trennt, wobei der Rotor (7) in Querrichtung verlaufende Kanäle (12) aufweist, die die stromaufwärts und die stromabwärts angeordnete Reinfluidkammer (8, 9) bzw. die stromaufwärts und die stromabwärts angeordnete Schmutzfluidkammer (10, 11) verbinden,
einem Strömungsweg (17) bei jeder vorgegebenen Drehstellung des Rotors (7), der eine Reinfluidkammer (8) und eine Schmutzfluidkammer (10) durch eine Anzahl der Kanäle (12a) so verbindet, um die Kanäle (12a) auszublasen oder zu spülen, bevor eine Drehung durchgeführt wird, um in die Reinfluidleitung (1) einzutreten,
einer Messeinrichtung, die angeordnet ist, um kontinuierlich eine Druckdifferenz zwischen der einen Reinfluidkammer (8) und der einen Schmutzfluidkammer (10) zu messen, und
einer Steuerungseinrichtung, die angeordnet ist, um kontinuierlich eine Druckverminderungseinrichtung (18) auf der Grundlage der Druckdifferenz so zu steuern, um sicherzustellen, dass ein Fluiddruck in der einen Reinfluidkammer (8) größer ist als ein Fluiddruck in der einen Schmutzfluidkammer (10).

2. Drehwärmetauscher nach Anspruch 1, wobei der Strömungsweg (17) die stromaufwärts angeordnete Reinfluidkammer (8) und die stromaufwärts angeordnete Schmutzfluidkammer (11) verbindet.

3. Drehwärmetauscher nach Anspruch 1 oder 2, wobei die Steuerungseinrichtung angeordnet ist, um kontinuierlich zu steuern, dass im Wesentlichen das gesamte verschmutzte Fluid und im Wesentlichen kein Reinfluid der Kanäle (12a) des Strömungswegs (17) kontinuierlich ausgeblasen wird.

4. Drehwärmetauscher nach einem der vorhergehenden Ansprüche, wobei die Messeinrichtung angeordnet ist, eine Druckdifferen zwischen Drücken in jeder der vier Kammern (8 - 11) in Bezug auf einen gemeinsamen Referenzdruck zu messen.

5. Drehwärmetauscher nach Anspruch 4, wobei die Steuerungseinrichtung angeordnet ist, aufzuzeichnen und vorzugsweise eine Warnung auszulösen, wenn eine Druckdifferenz zwischen den Schmutzfluidkammern (10, 11) oder zwischen den Reinfluidkammern (8, 9) einen Schwellwert überschreitet.

6. Drehwärmetauscher nach einem der vorhergehenden Ansprüche, wobei sich die Kanäle (12, 12a) im Wesentlichen parallel zu einer Drehachse des Rotors (7) erstrecken, wobei ein Teil (3a) der Trennwand (3) in einer Richtung senkrecht zu der Trennwand (3) versetzt ist, um so den Strömungsweg (17) vorzusehen.

7. Drehwärmetauscher nach einem der vorhergehenden Ansprüche, wobei die Messeinrichtung und die Steuereinrichtung als elektronische Bauteile ausgebildet sind.

8. Drehwärmetauscher nach einem der vorhergehenden Ansprüche, wobei die Druckverminderungseinrichtung (18) als eine von einem Elektromotor angetriebene Fluidklappe ausgebildet ist, die vorzugsweise in einem Leitungsabschnitt (15) angeordnet ist, der außerhalb der Kammern (8 - 11) vorgesehen ist, und die besonders bevorzugt außerhalb der stromaufwärts angeordneten Schmutzfluidkammer (11) angeordnet ist.

9. Verfahren zum Belüften eines Gebäudes, umfassend die folgenden Schritte:
Bereitstellen eines Drehwärmetauschers mit einer Reinfluildleitung (1) und einer Schmutzfluidleitung (2), die durch eine Trennwand (3) getrennt sind,
Ziehen von Fluid durch die Leitungen (1, 2),
Austausch von Wärme des Fluids zwischen den zwei Fluidleitungen (1, 2) mittels eines Rotors (7) mit in Querrichtung verlaufenden Kanälen (12),
Spülen oder Ausblasen der Kanäle (12) vor einer Drehung zum Eintreten in die Reinfluidleitung (1) mittels eines Strömungswegs (17), der eine Reinfluidkammer (8) und eine Schmutzfluidkammer (10) verbindet,
kontinuierliches Messen einer Druckdifferenz zwischen der einen Reinfluidkammer (8) und der einen Schmutzfluidkammer (10) und
kontinuierliches Steuern einer Druckverminderungseinrichtung (18) auf der Grundlage der Druckdifferenz, um sicherzustellen, dass ein Fluiddruck in der einen Reinfluidkammer (8) größer ist als ein Fluiddruck in der einen Schmutzfluidkammer (10).

10. Verfahren nach Anspruch 9, wobei das Verfahren mittels eines Drehwärmetauschers gemäß einem der Ansprüche 1 bis 8 durchgeführt wird.

## Revendications

1. Echangeur thermique rotatif comprenant
un conduit de fluide propre (1) et un conduit de fluide pollué (2) séparés par une paroi de séparation (3), des moyens d'aspiration (4) étant disposés pour entraîner le fluide à travers lesdits conduits (1, 2),
un rotor (7) séparant, respectivement, chacun desdits conduits (1, 2) en une chambre de fluide propre amont et aval (8 ; 9) et en une chambre de fluide pollué aval et amont (10 ; 11) ledit rotor (7) comportant des canaux transversaux (12) raccordant lesdites chambres de fluide propre amont et aval (8, 9) et lesdites chambres de fluide pollué amont et aval (11, 10), respectivement),
un parcours d'écoulement (17) au niveau d'une quelconque position donnée de rotation dudit rotor (7) raccordant une chambre de fluide propre (8) et une chambre de fluide pollué (10) à travers un certain nombre desdits canaux (12a) de façon à souffler dans, ou à purger, lesdits canaux (12a) avant rotation pour entrer dans ledit conduit de fluide propre (1),
des moyens de mesure agencés pour mesurer en continu une différence de pression entre ladite première chambre de fluide propre (8) et ladite première chambre de fluide pollué (10), et
des moyens de contrôle agencés en vue de contrôler en continu un dispositif de perte de pression (18) sur la base de ladite différence de pression de façon à assurer qu'une pression de fluide dans ladite première chambre de fluide propre (8) soit plus élevée qu'une pression de fluide dans ladite première chambre de fluide pollué (10).

2. Echangeur thermique rotatif selon la revendication 1, dans lequel ledit parcours d'écoulement (17) raccorde ladite chambre amont de fluide propre (8) et ladite chambre amont de fluide pollué (11).

3. Echangeur thermique rotatif selon la revendication 1 ou 2, dans lequel lesdits moyens de contrôle sont agencés afin de contrôler de façon continue qu'essentiellement la totalité du fluide pollué est expulsée, et qu'essentiellement le fluide propre desdits canaux (12a) dudit parcours d'écoulement (17) ne l'est pas.

4. Echangeur thermique rotatif selon l'une quelconque des revendications précédentes, dans lequel lesdits moyens de mesure sont agencés pour mesurer une différence de pression entre les pressions dans chacune desdites quatre chambres (8 - 11) par rapport à une pression de référence commune.

5. Echangeur thermique rotatif selon la revendication 4, dans lequel lesdits moyens de contrôle sont agencés pour enregistrer et, de préférence, activer une alarme, lorsqu'une différence de pression entre lesdites chambres de fluide pollué (10, 11) ou entre lesdites chambres de fluide propre (8, 9) dépassent une valeur de seuil.

6. Echangeur thermique rotatif selon l'une quelconque des revendications précédentes, dans lequel lesdits canaux (12, 12a) s'étendent de façon essentiellement parallèle à un axe de rotation dudit rotor (7), une partie (3a) de ladite paroi de séparation (3) étant déplacée dans une direction perpendiculaire à ladite paroi de séparation (3) de façon à fournir ledit parcours d'écoulement (17).

7. Echangeur thermique rotatif selon l'une quelconque des revendications précédentes, dans lequel lesdits moyens de mesure et lesdits moyens de contrôle se présentent sous la forme de dispositifs électroniques.

8. Echangeur thermique rotatif selon l'une quelconque des revendications précédentes, dans lequel ledit dispositif de perte de pression (18) est fourni sous la forme d'un amortisseur à fluide commandé par un moteur électrique, positionné, de préférence, dans une partie de conduit (15) prévue à l'extérieur desdites chambres (8-11), avec plus de préférence, positionné à l'extérieur de ladite chambre amont de fluide pollué (11).

9. Procédé de ventilation d'un immeuble comprenant les étapes comprenant de :
fournir un échangeur thermique rotatif comportant un conduit de fluide propre (1) et un conduite de fluide pollué (2) séparés par une paroi de séparation (3),
entraîner le fluide à travers lesdits conduits (1, 2),
faire un échange thermique de fluide entre les deux dits conduits de fluide (1, 2) au moyen d'un rotor (7) doté de canaux transverses (12),
purger, ou souffler dans, lesdits canaux (12) avant une rotation pour entrer dans ledit conduit de fluide propre (1) au moyen d'un parcours d'écoulement (17) raccordant une première chambre de fluide propre (8) et une première chambre de fluide pollué (10),
mesurer de façon continue une différence de pression entre ladite première chambre de fluide propre (8) et ladite première chambre de fluide pollué (10), et
contrôler de façon continue un dispositif de perte de pression (18) sur la base de ladite différence de pression de façon à assurer qu'une pression de fluide dans ladite première chambre de fluide propre (8) soit plus élevée qu'une pression de fluide dans ladite première chambre de fluide pollué (10).

10. Procédé selon la revendication 9, dans lequel ledit procédé est réalisé au moyen d'un échangeur thermique rotatif selon l'une quelconque des revendications 1 à 8.
